# DEMANDE DE BREVET EUROPEEN

(11) **EP 1 995 337 A1**
(43) Date de publication de la demande: **26.11.2008**
(21) Numéro de dépôt: 08104075.0
(22) Date de dépôt: 23.05.2008
(51) Int. Cl.: C22C 9/05, C22F 1/08, F16H 63/32

(54) **Alliage à base de cuivre et pièce obtenue**

(30) Priorité: 25.05.2007 FR 0755263
(71) Demandeur: Bronze Alu, 27750 La Couture Boussey (FR)
(72) Inventeur: Janvier, Bruno, 41230, COURMEMIN (FR); Doremus, Eric, 80310, BELLOY SUR SOMME (FR)
(74) Mandataire: Domenego, Bertrand

(57) **Abrégé**

Alliage à base de cuivre caractérisé en ce que sa composition chimique comprend, en % en poids :
55% ≤ Cu ≤ 65%
15% ≤ Mn ≤ 25%
0% ≤ Zn ≤ 15%
5% ≤ Al ≤ 10%
0% ≤ Fe ≤ 7%
Ni ≤ 2%
si ≤ 4%

Le reste étant des impuretés résultant de l'élaboration, la somme des teneurs en impuretés étant inférieure à 1%.

## Description

La présente invention est relative à un alliage à base de cuivre susceptible d'être utilisé pour fabriquer des pièces de mécanique par moulage en coquille ou moulage sous pression ou moulage en sable. Cet alliage est utilisable plus particulièrement pour fabriquer des pièces telles que des fourchettes de boîte de vitesses de véhicule automobile.

Les fourchettes de boîte de vitesses de véhicule automobile sont des pièces qui peuvent être obtenues par différents procédés de fabrication. Ces pièces peuvent être en acier forgé ou en acier mécano soudé ou encore obtenues par moulage de fonte et en particulier de fonte sphéroïdale, ou bien par moulage d'alliage non ferreux tel que les alliages d'aluminium comme Al Si 9 Cu3 ou les alliages hyper siliciés (de 14 à 17% de silicium), ou en laiton et en particulier en laiton dit HR, ou encore en alliage cuivre aluminium. Chacun des modes de fabrication présente des avantages et des inconvénients. En particulier le moulage d'alliage cuivre aluminium permet de réaliser des pièces ayant de hautes caractéristiques mécaniques tout en étant relativement légères.

L'alliage cuivre aluminium utilisé habituellement pour fabriquer des fourchettes de boîte de vitesses contient de 80 à 90% de cuivre, environ 10% d'aluminium, parfois entre 3 et 5% de fer, et parfois de 3 à 6% de nickel. Le nickel est utilisé notamment pour faciliter la dissolution du fer dans l'alliage, pour améliorer la résistance à la corrosion et pour augmenter les caractéristiques mécaniques. Ces alliages sont relativement denses et leur densité est supérieure à 7,25. Bien qu'ayant des caractéristiques mécaniques très intéressantes et bien adaptées à la fabrication des fourchettes de boîtes de vitesses, ces alliages présentent l'inconvénient d'être très coûteux notamment du fait de leur teneur élevée en cuivre et de la présence fréquente de nickel associé au fer dans des proportions non négligeables.

Par ailleurs, avec les alliages connus, il devient de plus en plus difficile de fabriquer des fourchettes de boîte de vitesses qui répondent aux nouvelles contraintes des cahiers des charges des donneurs d'ordres. En effet, ceux-ci imposent, dans un volume de plus en plus réduit pour la conception du produit, des niveaux de déformations élastiques plus faibles pour une charge appliquée de référence et des durées de vie plus élevées avec des sollicitations mécaniques également plus élevées.

Le but de la présente invention est de remédier à cet inconvénient en proposant un alliage non ferreux et notamment un alliage de type cuivreux qui peut être utilisé en fonderie par les procédés de moulage en coquille, ou de moulage sous pression ou de moulage en sable pour fabriquer des pièces ayant des caractéristiques mécaniques élevées, qui a de bonnes propriétés de coulabilité, qui répond aux nouveaux cahiers de charges des donneurs d'ordres, et qui est sensiblement moins coûteux que les alliages connus de l'état de la technique.

A cet effet l'invention à pour objet un alliage à base de cuivre dont la composition chimique comprend, en % en poids :
55% ≤ Cu ≤ 65%
15% ≤ Mn ≤ 25%
0% ≤ Zn ≤ 15%
5% ≤ Al ≤ 10%
0% ≤ Fe ≤ 7%
Ni ≤ 2%
Si ≤ 4%

Le reste étant des impuretés résultant de l'élaboration, la somme des teneurs en impuretés étant inférieure à 1%.

De préférence, la composition chimique de l'alliage satisfait une ou plusieurs des conditions suivantes :
6% ≤ Zn ≤ 13%
1% ≤ Fe 5%
56% ≤ Cu ≤ 64%
17% ≤ Mn ≤ 23%
6% ≤ Al ≤ 8%
Si ≤ 2%

Dans un mode de préféré de réalisation, la composition chimique de l'alliage est telle que :
57% ≤ Cu ≤ 63%
18% ≤ Mn ≤ 22%
7% ≤ Zn ≤ 12%
6% ≤ Al ≤ 8%
2% ≤ Fe ≤ 4%
Ni ≤ 2%
si 1%

Le reste étant des impuretés résultant de l'élaboration, la somme des teneurs en impuretés étant inférieure à 1 %.

De préférence, l'alliage comprend plus de 0,1 % de nickel.

L'invention concerne également un procédé de fabrication par moulage d'une pièce en alliage selon l'invention, dans lequel on élabore un alliage fondu par fusion d'une charge constituée essentiellement de cuivre, de fer, d'aluminium, de manganèse, de zinc et de nickel en des proportions pondérales correspondant à la composition visée pour l'alliage, puis on coule l'alliage dans un moule. Dans le procédé, on fond d'abord la partie de la charge destinée à apporter le manganèse, le fer, le cuivre et le nickel, puis on ajoute la partie de la charge destinée à apporter le zinc et l'aluminium.

De préférence, avant d'introduire la partie de la charge destinée à apporter le zinc, on laisse refroidir le bain liquide jusqu'à une température comprise entre 950 °C et 1100 °C, et mieux entre 950 °C et 1030 °C, et lorsque tous les éléments de l'alliage ont été fondus, on effectue si nécessaire un décrassage et on transfert le bain liquide dans un four de maintien capoté dont la température est comprise entre 950°C et 1100°C, et mieux entre 970°C et 1030 °C.

L'invention concerne, enfin, une pièce en alliage à base de cuivre selon l'invention dans laquelle, la limite d'élasticité conventionnelle Rp 0.2 de l'alliage est supérieure à 500 MPa et la résistance à la traction de l'alliage Rm est supérieure à 600 MPa. De plus, le module d'Young est sensiblement plus élevé que celui des alliages connus et peut atteindre des valeurs moyennes de 140000 MPa. De ce fait, la pièce réalisée dans cet alliage présente des niveaux de déformation élastique pour une charge appliquée de référence plus faible que ceux obtenus sur des pièces identiques en alliage selon l'art antérieur.

La pièce constitue, par exemple, une fourchette de boîte de vitesses d'automobile qui répond aux nouvelles contraintes des cahiers des charges des donneurs d'ordres.

L'invention va maintenant être décrite de façon plus précise mais non limitative et illustrée par des exemples.

Les inventeurs ont constaté de façon nouvelle qu'un alliage à base de cuivre contenant, en % en poids :
- du cuivre entre 55% et 65%, de préférence entre 56% et 64%, et mieux encore entre 57% et 63%,
- du manganèse entre 15% et 25%, de préférence entre 17% et 23%, et mieux encore entre 18% et 22%,
- du zinc entre 0% et 15% et de préférence entre 6% et 13% et mieux encore entre 7% et 12%,
- de l'aluminium entre 5% et 10%, de préférence entre 6% et 8%,
- du fer entre 0% et 7%, et de préférence entre 1% et 5%, et mieux encore entre 2% et 4%,
- au plus 4% de silicium et de préférence moins de 1 % de silicium;
- du nickel dans une proportion inférieure à 2% ; de préférence inférieure à 1%, mais il est souhaitable que la teneur en cet élément soit supérieur à 0,1 %, et mieux 0,35% afin d'obtenir une limite d'élasticité pouvant dépasser 600 MPa,
le reste étant des impuretés résultant de l'élaboration.

La somme des teneurs en ces impuretés ne dépasseront pas 1% et de préférence étant inférieur à 0,5%.

Les inventeurs ont en outre constaté que le procédé d'élaboration d'un tel alliage avait une incidence sensible sur ses propriétés. En particulier ils ont constaté qu'en coulant à partir d'une température voisine de 1000°C, il était possible d'obtenir des pièces de forme complexe ayant une bonne santé interne et constituées d'un alliage ayant des caractéristiques mécaniques élevées, en particulier une limite d'élasticité conventionnelle Rp 0,2 supérieure à 500 MPa, une résistance à la traction Rm supérieure à 600 MPa et une dureté supérieure à 290 HV. De ce fait cet alliage est particulièrement adapté à la fabrication de pièces de mécanique de forme complexe telles que les fourchettes de boîte de vitesses de véhicule automobile.

Pour élaborer cet alliage il convient tout d'abord de rassembler une charge qui est constituée de composants destinés à apporter le manganèse et le fer, de préférence sous forme de manganèse d'une part et de fer d'autre part, ou bien sous la forme de morceaux d'alliage mangano-ferreux à forte teneur en manganèse, d'éléments destinés à apporter le cuivre, de préférence des éléments à base de cuivre contenant moins de 1% d'impuretés, et enfin d'éléments destinés à apporter le zinc et l'aluminium qui peuvent être par exemple de l'alliage d'aluminium recyclé contenant au moins 85% d'aluminium, du zinc quasiment pur sous la forme de lingots ou sous la forme de grenaille. Bien évidemment les différents composants de la charge doivent être apportés et préparés et en des quantités qui correspondent aux teneurs visées pour l'alliage. L'homme du métier sait déterminer ces quantités qui sont telles que la répartition pondérale des différents éléments dans la charge est sensiblement égale à celle qui est visée pour l'alliage.

Pour élaborer l'alliage, on introduit dans un four, par exemple un four à induction, d'abord les constituants de la charge destinés à apporter le manganèse, le fer, le cuivre, l'aluminium et éventuellement le nickel et on les fait fondre. Avantageusement, les éléments apportant le manganèse et le fer sont d'abord disposés au fond du four de fusion et les éléments apportant le cuivre et l'aluminium sont superposés sur la couche des éléments contenant le manganèse et le fer. Avantageusement, on fait fondre d'abord les éléments apportant les charges de manganèse, de fer, de cuivre avant d'introduire dans le four de fusion les éléments apportant l'aluminium. Lorsque tous ces éléments sont fondus, on abaisse la température dans le bain de fusion jusqu'à une température comprise entre 950 °C et 1100 °C, de préférence entre 950 °C et 1030 °C, permettant d'introduire les éléments apportant le zinc. Les éléments apportant l'aluminium peuvent être également introduits en dernier, après introduction du zinc. Il est possible enfin d'introduire en même temps dans le four de fusion tous les éléments apportant le manganèse, le fer, le cuivre, l'aluminium, le zinc et le nickel puis de faire fondre l'ensemble. Puis, après contrôle par analyse spectrométrique sur une éprouvette en forme de médaille réalisée dans un moule du type « coulée en coquille », on ajuste, si besoin, l'alliage en ajoutant soit du manganèse, soit du fer, soit du cuivre, soit de l'aluminium, soit du zinc, soit du nickel, soit une combinaison des ces six matières. Lorsque l'élaboration par fusion de l'alliage est terminée, on décrasse si nécessaire la surface du bain et on transfert le métal liquide dans un four de maintient capoté dont la température est régulée entre 950°C et 1100°C, de préférence entre 970°C et 1030°C. C'est à partir de ce métal liquide qu'on effectue le moulage en coquille ou le moulage sous pression ou le moulage en moule de sable. L'opération de moulage est connue en elle-même de l'homme du métier et on ne la décrira pas plus en détail.

A titre d'exemple on a réalisé un alliage selon l'invention à partir d'une charge dont les constituants apportent dans une précision de l'ordre de plus ou moins un pourcent, 60% de cuivre, 20% de manganèse, 7% d'aluminium, 3% de fer, 10% de zinc, le reste étant des impuretés ou des éléments en faible quantité tel que du silicium et du nickel.

Cette charge a été fondue en utilisant l'un des procédés tels qu'ils viennent d'être décrits et on a coulé des pièces correspondant à des fourchettes de boîte de vitesses de véhicule automobile. On a prélevé du métal sur les pièces obtenues par moulage, et on a analysé la composition chimique par des méthodes d'analyse chimique adaptées. Les résultats de cette analyse sont les suivantes:
- cuivre 61,2% (analyse par électrolyse)
- zinc 10,15% (analyse par plasma)
- fer 1,33 % (méthode d'analyse SAA)
- nickel 0,34 % (analyse par plasma)
- manganèse 19,65% (analyse par volumétrie)
- aluminium 6,3% (méthode d'analyse SAA)
- silicium 0,73% (analyse par gravimétrie).
Impuretés diverses 0,3%

On a également mesuré les caractéristiques mécaniques de l'alliage et on a obtenu les résultats suivants :
Limite d'élasticité conventionnelle Rp0,2 (MPa) :

| | |
|---|---|
| MINI | 697 |
| MOYEN | 765 |
| MAXI | 815 |

Résistance à la traction Rm (MPa) :

| | |
|---|---|
| MINI | 736 |
| MOYEN | 803 |
| MAXI | 877 |

Allongement A % :

| | |
|---|---|
| MINI | 0,7 |
| MOYEN | 2,4 |
| MAXI | 4,7 |

Module d'Young E :

| | |
|---|---|
| MAXI | 142900 |

Dureté HB usiné 305 (sur une surface obtenue par fraisage).

Ces propriétés mécaniques et le fait que les pièces qui ont été coulées ne présentaient que des défauts de santé interne acceptables montrent que l'alliage est parfaitement bien adapté à la fabrication par moulage de pièces complexes ayant des caractéristiques mécaniques élevées. En outre cet alliage s'usine dans de bonnes conditions. Il est donc bien adapté pour la fabrication de fourchettes pour boîte de vitesses automobile.

On a également effectué sur les alliages obtenus des examens métallographiques qui ont fait apparaître que la structure comprenait trois constituants : d'une part une matrice, d'autre part de fins composés en forme de globules gris clairs dispersés dans la matrice et enfin un eutectique. Les compositions chimiques des trois constituants ont été déterminées par une analyse à la microsonde électronique. Les résultats de cette analyse sont indiqués au tableau suivant.

| | Composé gris clair | Eutectique | Matrice |
|---|---|---|---|
| Zn | 4,06 | 9,92 | 10,83 |
| Cu | 24,19 | 52,69 | 61,95 |
| Ni | 0,46 | 0,34 | 0,50 |
| Fe | 15,09 | 1,44 | 0,92 |
| Mn | 45,46 | 25,89 | 19,84 |
| Al | 2,48 | 6,54 | 5,19 |
| Si | 8,11 | 3,09 | 0,85 |
| Total | 99,87 | 99,93 | 100,08 |

A titre de contre exemple on a fabriqué l'alliage dont la composition est la suivante :

| | Alliage 1 |
|---|---|
| Cuivre | 53,5 |
| Zinc | 13 |
| Fer | 1,7 |
| Manganèse | 20,5 |
| Aluminium | 10 |
| Silicium | 1 |

Avec cet alliage on a réalisé des pièces identiques à celles qui avaient été réalisées avec l'alliage selon l'invention. On a constaté qu'avec cet alliage on rencontrait des difficultés de coulée. En outre les caractéristiques mécaniques que l'on a mesurées sur pièces étaient les suivantes :

| | Alliage 1 |
|---|---|
| Rp 0,2 Moy | 355 |
| Rm Moy | 384 |
| A% Moy | 0,9 |
| HB Brut | _ |
| HB Usiné | _ |

Ces résultats montrent que l'alliage 1 a des caractéristiques mécaniques sensiblement plus faibles que l'alliage utilisé selon l'invention et que en outre il est plus difficiles à couler.

Par ailleurs, les caractéristiques de l'alliages selon l'invention peuvent être comparées aux caractéristiques d'un alliage du type cuivre zinc manganèse contenant de 45 à 59% de cuivre, de 17 à 23% de zinc, de 17 à 23% de manganèse environ 5% de nickel environ 1% de fer et de 0,25 à 3% d'aluminium. Cet alliage a des caractéristiques mécaniques beaucoup plus faibles puisque sa limite d'élasticité conventionnelle Rp 0,2 est de l'ordre de 225 MPa, et sa résistance à la traction Rm est de l'ordre de 457 MPa. Ces valeurs sont très sensiblement inférieures aux valeurs qu'on obtient avec l'alliage selon l'invention.

Ainsi, l'alliage selon l'invention permet de fabriquer par moulage en coquille ou moulage sous pression ou moulage en sable des pièces de forme complexe difficile à couler ayant des caractéristiques mécaniques très élevées. Cet alliage permet de réaliser le moulage à partir de température de coulée inférieure 1100°C. En outre il a l'avantage d'être plus économique que les alliages connus.

## Revendications

1. Alliage à base de cuivre **caractérisé en ce que** sa composition chimique comprend, en % en poids :
55% ≤ Cu ≤ 65%
15% ≤ Mn ≤ 25%
0% ≤ Zn ≤ 15%
5% ≤ Al ≤ 10%
0% ≤ Fe ≤ 7%
Ni ≤ 2%
Si ≤ 4%
Le reste étant des impuretés résultant de l'élaboration, la somme des teneurs en impuretés étant inférieure à 1%.

2. Alliage selon la revendication 1, **caractérisé en ce que** sa composition chimique est telle que :
6% ≤ Zn ≤ 13%

3. Alliage selon la revendication 1 ou la revendication 2, **caractérisé en ce que** sa composition chimique est telle que :
1% ≤ Fe 5%

4. Alliage selon l'une quelconque des revendications 1 à 3, **caractérisé en ce que** sa composition chimique est telle que :
56% ≤ Cu ≤ 64%
17% ≤ Mn ≤ 23%
6% ≤ Al ≤ 8%

5. Alliage selon l'une quelconque des revendications 1 à 4, **caractérisé en ce que** la composition chimique est telle que :
Si ≤ 2%

6. Alliage selon la revendication 1, **caractérisé en ce que** sa composition chimique est telle que :
57% ≤ Cu ≤ 63%
18% ≤ Mn ≤ 22%
7% ≤ Zn ≤ 12%
6% ≤ Al ≤ 8%
2% ≤ Fe ≤ 4%
Ni ≤ 2%
si ≤ 1%
Le reste étant des impuretés résultant de l'élaboration, la somme des teneurs en impuretés étant inférieure à 1%.

7. Alliage selon l'une quelconque des revendications 1 à 6 , **caractérisé en ce que** la composition chimique est telle que : Ni ≥ 0,1 %.

8. Procédé de fabrication par moulage d'une pièce en alliage selon l'une quelconque des revendications 1 à 7, selon lequel on élabore un alliage fondu par fusion d'une charge constitué de cuivre, de fer, d'aluminium, de manganèse, de zinc et de nickel en des proportions pondérales correspondant à la composition visée pour l'alliage, puis on coule l'alliage dans un moule, **caractérisé en ce que** pour élaborer l'alliage,
- on fond d'abord la partie de la charge destinée à apporter le manganèse, le fer, le cuivre,
- puis ajoute la partie de la charge destinée à apporter le zinc et l'aluminium.

9. Procédé selon la revendication 8, **caractérisé en ce qu'**avant d'introduire la partie de la charge destinée à apporter le zinc, on laisse refroidir le bain liquide jusqu'à une température comprise entre 950°C et 1100°C, de préférence entre 950°C et 1030°C, et, et lorsque tous les éléments de l'alliage ont été fondus, on effectue si nécessaire un décrassage et on transfert le bain liquide dans un four de maintien capoté dont la température est comprise entre 950°C et 1100°C, de préférence entre 970 °C et 1030 °C.

10. Pièce en alliage à base de cuivre selon l'un quelconque des revendications 1 à 6, **caractérisé en ce que** la limite d'élasticité conventionnelle Rp 0.2 de l'alliage est supérieure à 500 MPa et la résistance à la traction de l'alliage Rm est supérieure à 600 MPa.

11. Pièce selon la revendication 10, **caractérisée en ce qu'**elle constitue une fourchette de boîte de vitesses d'automobile.
